# EUROPEAN PATENT APPLICATION

(11) **EP 4 714 650 A2**
(43) Date of publication of application: **25.03.2026**
(21) Application number: 26154450.6
(22) Date of filing: 04.08.2023
(51) Int. Cl.: B32B 7/12

(54) **MOLDED TRIM COVER ASSEMBLY WITH IMPROVED RECYCLABILITY AND AIR PERMEABILITY**

(30) Priority: 04.08.2022 US 202263394987 P
(62) Divisional of application: 23761674.3
(71) Applicant: Magna Seating Inc., Aurora, Ontario L4G 7K1 (CA); Twe Nonwovens US, High Point, North Carolina 27263 (US)
(72) Inventor: Kobaner, Can, Cary, North Carolina, 27519 (US); Kozlowski, Eric, Oakland Township, Michigan, 48363 (US)
(74) Representative: Witte, Weller & Partner Patentanwälte mbB

(57) **Abstract**

A trim cover for an automotive seat assembly includes a seat cover and polyester batting fixedly coupled to the seat cover. The polyester batting is formed out of polyester fibers.

## Description

### CROSS-REFERENCE TO RELATED APPLICATIONS

This application claims priority to U.S. Provisional Application 63/394,987, filed on August 4, 2022, the disclosure of which is hereby incorporated by reference in its entirety.

### FIELD AND BACKGROUND OF THE INVENTION

The present invention relates to a seat assembly for use in an automotive vehicle. More particularly, the invention relates to a trim cover for use in an automotive seat assembly.

### DESCRIPTION OF RELATED ART

Automotive vehicles typically include one or more seat assemblies having a seat cushion and a seat back for supporting a passenger above a vehicle floor. It is commonly known for certain seat assemblies to include trim covers covering portions of the seat cushion or the seat back. Certain known trim covers include a cover material forming a seating surface and a foam pad comprising polyurethane foam adhered to a reverse side of the cover material. Commonly used polyurethane pads typically have a thickness of about 3 mm to about 12 mm. Further, it is commonly known for the foam pads to be laminated onto the cover material using adhesive or flame-lamination, which permanently adheres the foam pad to the cover material. Certain commonly used cover materials are formed out of polyester cloth.

However, the trim covers are not recyclable when the trim cover includes a polyurethane foam pad adhered to a cover material since the polyurethane foam is not easily separated from the cover material.

In addition, certain seat assemblies include a heating and ventilation system integrated within the seat assembly. A spacer-fabric is typically inserted between the heating and ventilation system and the trim cover to maintain air permeability and airflow.

However, the spacer-fabric requires additional labor to install within the seat assembly and includes a material cost.

It is desirable for the trim cover to be formed out of commonly recycled materials so that the trim cover may be recycled. It is also desirable to form the trim cover with an attached spacer fabric for the seat assemblies having a heating and ventilation system.

### SUMMARY OF THE INVENTION

According to one embodiment, there is provided a trim cover for an automotive seat assembly. The trim cover includes a seat cover having a lower surface and a polyester batting fixedly coupled to the lower surface of the seat cover.

According to another embodiment, there is provided a method of forming a trim cover for a seat assembly. The method includes the steps of providing a cover material having a lower surface, providing a polyester batting comprising polyester fibers, adhering the polyester batting to the lower surface of the cover material to form a laminated sheet, and cutting the laminated sheet to form the trim cover.

The following is a list of numbered aspects of the invention:
1. A trim cover for an automotive seat assembly, comprising:
   a seat cover having a lower surface; and
   a polyester batting fixedly coupled to the lower surface of the seat cover, the polyester batting comprising polyester fibers.
2. The trim cover as set forth in aspect 1, wherein:
   the polyester fibers comprise at least about 95% of bulk polyester fibers; and
   the polyester batting has a fiber denier of about 20 D to about 25 D and a batting thickness of about 3 mm to about 13 mm.
3. The trim cover as set forth in aspect 1, wherein:
   the polyester fibers comprise at least about 95% of bulk polyester fibers; and
   the polyester batting has a fiber denier of about 35 D to about 45 D and a batting thickness of about 8 mm to about 15 mm.
4. The trim cover as set forth in aspect 3, wherein the seat cover comprises a polyester fabric.
5. The trim cover as set forth in aspect 1, wherein the polyester fibers comprise at least about 60% and equal or less than about 90% bulk polyester fibers and at least about 10% and equal or less than about 40% melt polyester fibers.
6. The trim cover as set forth in aspect 5, wherein the melt polyester fibers comprise bi-component polyester fibers.
7. The trim cover as set forth in aspect 6, wherein:
   the bi-component polyester fibers comprise high-temp polyester fibers and low-temp polyester fibers, the low-temp polyester fibers having a melting temperature greater than or equal to about 100 °C and less than or equal to about 180 °C, the high-temp polyester fibers having a melting temperature greater than the melting temperature of the low-temp polyester fibers.
8. The trim cover as set forth in aspect 7, wherein the polyester batting has a fiber denier of about 20 D to about 25 D and has a batting thickness greater or equal to about 3 mm and less than or equal to about 13 mm.
9. The trim cover as set forth in aspect 7, wherein the polyester batting has a fiber denier of about 35 D to about 45 D and a batting thickness of about 8 mm to about 15 mm.
10. The trim cover as set forth in aspect 7, wherein the trim cover is compression molded to form a 3-dimensional shape after the polyester batting is fixedly coupled to the seat cover.
11. The trim cover as set forth in aspect 7, wherein the bi-component polyester fibers have a side-by-side cross-section, core and sheath cross-section, or a mixed fiber cross-section.
12. The trim cover as set forth in aspect 7, wherein the bulk polyester fibers comprise one or more of virgin polyester fibers, recycled polyester fibers, bio-based polyester fibers, and natural polyester fibers.
13. The trim cover as set forth in aspect 7, wherein the seat cover comprises a polyester fabric.
14. The trim cover as set forth in aspect 13, wherein the polyester batting comprises at least 60% recycled polyester fiber.
15. The trim cover as set forth in aspect 14, wherein the trim cover is melt recyclable.
16. A method of forming a trim cover for seat assembly, comprising the steps of:
   providing a cover material having a lower surface;
   providing polyester batting comprising polyester fibers;
   adhering the polyester batting to the lower surface of the cover material to form a laminated sheet; and
   cutting the laminated sheet to form the trim cover.
17. The method as set forth in aspect16, wherein the polyester batting comprises bulk polyester fibers.
18. The method as set forth in aspect 17, wherein the polyester batting comprises between about 10% and about 40% melt polyester fibers.
19. The method as set forth in aspect 18, wherein:
   the melt polyester fibers include bi-component polyester fibers which include high-temp polyester fibers and low-temp polyester fibers;
   the low-temp polyester fibers have a melting temperature greater than or equal to about 100 °C and less than or equal to about 180 °C; and
   the high-temp polyester fibers having a melting temperature greater than the melting temperature of the low-temp polyester fibers.
20. The method as set forth in aspect 19, wherein the polyester batting has a fiber denier at least about 20 D and less than or equal to about 45 D.
21. The method as set forth in aspect 20, further comprising a step of preheating the PET batting prior to adhering the polyester batting to the cover material.
22. The method as set forth in aspect 20, further comprising a step of compression molding the trim cover to form a 3-dimensional molded panel wherein at least a portion of the low-temp polyester fibers melt at a molding temperature of between about 100 °C to about 180 °C during the compression molding.
23. The method as set forth in aspect 22, wherein the bi-component polyester fibers have a melting temperature equal or greater than about 100 °C and less than or equal to about 130 °C.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a perspective view of a seat assembly including a seat cushion, a seat back, and trim cover assemblies covering the seat cushion and the seat back, according to one embodiment of the present invention;
Figure 2 is an exploded perspective view of the seat assembly of Figure 1;
Figure 3 is a perspective view of a trim cover assembly, according to one embodiment of the present invention;
Figure 4 is cross-sectional view of the trim cover assembly and a base pad within the seat cushion taken along section 4-4 in Figure 1, according to one embodiment of the present invention;
Figure 5 is a cross-sectional view of the trim cover assembly and a base pad within the seat cushion of Figure 1 taken along section 4-4, showing the seat cushion including a heating and ventilation system, according to another embodiment of the present invention;
Figure 6 is an enlarged view of portion 6 in Figure 4, showing a trim cover including a polyester batting and a seat cover;
Figure 7 is an enlarged view of portion 7 in Figure 5, showing a trim cover including a polyester batting and a seat cover;
Figure 8A shows a cross-sectional view of a monofilament polyester fiber; according to another embodiment of the present invention;
Figure 8B shows a cross-sectional view of a bi-component polyester fiber having a side-by-side cross-section; according to another embodiment of the present invention;
Figure 8C shows a cross-sectional view of a bi-component polyester fiber having a core and sheath cross-section; according to another embodiment of the present invention;
Figure 8D shows a cross-sectional view of a bi-component polyester fiber having a mixed fiber cross-section; according to another embodiment of the present invention;
Figure 9 is a flow chart of a process to form a trim cover assembly, according to one embodiment of the present invention;
Figure 10 is a cross-sectional view of the trim cover assembly and a base pad within the seat cushion of Figure 1 taken along section line 4-4, showing the seat cushion including a heating and ventilation system, according to another embodiment of the present invention;
Figure 11 is a cross-sectional view of the trim cover assembly and a base pad within the seat cushion of Figure 1 taken along section line 4-4, according to another embodiment of the present invention;
Figure 12 is an enlarged view of portion 12 in Figure 10;
Figure 13 is an enlarged view of portion 13 in Figure 11;
Figure 14 is a flow chart of a process to form a trim cover assembly, according to another embodiment of the present invention;
Figure 15 is a perspective view of a laminated blocker; according to another embodiment of the present invention;
Figure 16 is an illustrative view of a molding process to form a molded trim cover; according to another embodiment of the present invention;
Figure 17 is a front view of a trim cover; according to another embodiment of the present invention;
Figure 18 is a cross-sectional view of a known assembly of a base pad of a seat cushion and a trim cover assembly having a polyurethane foam pad; and
Figure 19 is a cross-sectional view of another known assembly of a trim cover, a spacer-fabric, and a base pad of a seat cushion having a heating and ventilation system.

### DETAILED DESCRIPTION OF THE INVENTION

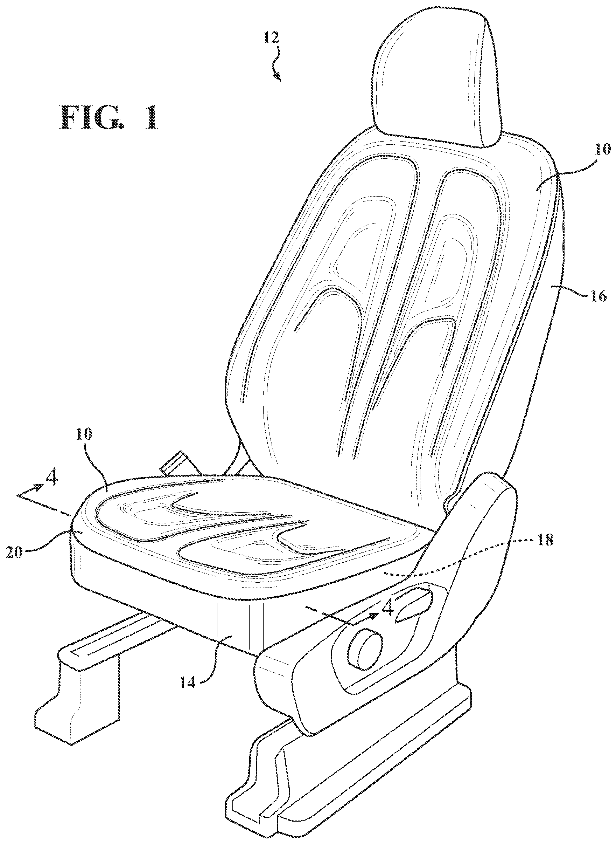

Figures 1-17 illustrate components of a trim cover assembly 10 for use in an automotive vehicle seat assembly 12 according to embodiments described herein. Directional references employed or shown in the description, figures, or claims, such as top, bottom, upper, lower, upward, downward, lengthwise, widthwise, left, right, and the like, are relative terms employed for ease of description and are not intended to limit the scope of the invention in any respect. Referring to the Figures, like numerals indicate like or corresponding parts throughout the several views.

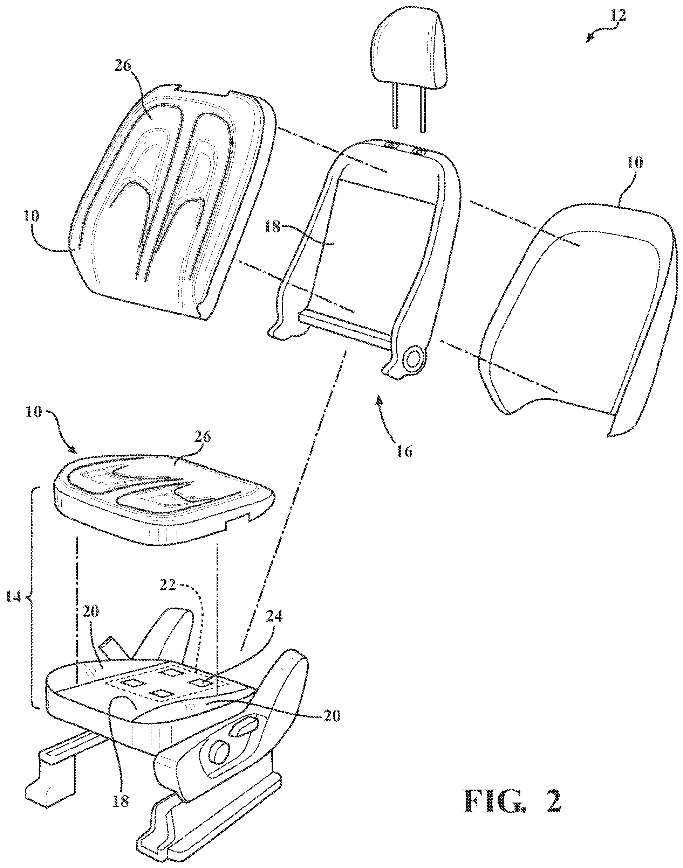

Depicted in Figures 1 and 2, the seat assembly 12 includes a seat cushion 14 and a seat back 16 pivotally coupled to the seat cushion 14. The seat cushion 14 and the seat back 16 typically include a base pad 18 forming a support layer within the seat assembly 12. In addition, the seat cushion 14 and the seat back 16 might include bolsters 20 which provide additional support to the occupant of the seat assembly 12. The seat assembly 12 optionally includes a heating and ventilation system 22 for occupant comfort and temperature control. The heating and ventilation system 22 includes one or more airflow channels 24 passing through the base pad 18. The seat assembly 12 also includes trim cover assemblies 10 which are assembled over one or more exterior surfaces of the seat assembly 12 and cover the base pad 18 and other components in the seat assembly 12 to provide a seating surface for an occupant of the automotive vehicle.

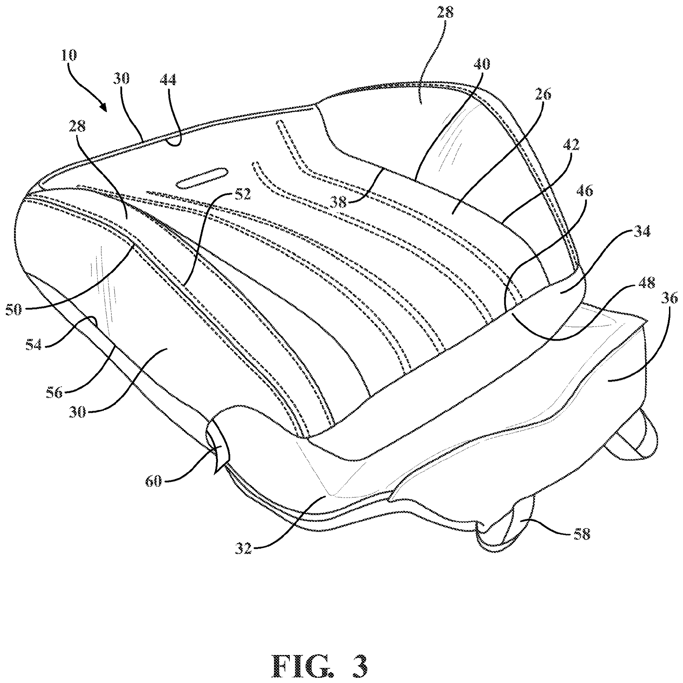

An exemplary trim cover assembly 10 for the seat back 16 is shown in Figure 3. The exemplary trim cover assembly 10 includes a trim cover panel 26 (hereinafter, "trim cover"), opposing bolster panels 28, one or more side panels 30, a back panel 32, an auxiliary panel 34, and a bottom panel 36. The trim cover 26 includes opposing lateral edges 38 sewn to inboard edges 40 of the respective bolster panels 28 to form a sewn seam 42. In addition, the trim cover 26 includes an upper edge 44 sewn to one of the side panels 30 and a lower edge 46 sewn to one edge 48 of the auxiliary panel 34. Additional side panels 30 have a forward edge 50 sewn to an outer edge 52 of the respective bolster panels 28. The side panels 30 include rearward edges 54 attached to adjacent edges 56 of the back panel 32. The exemplary trim cover assembly 10 might also include fasteners 58, zippers 60, and the like as non-limiting examples, fixedly coupled to one or more components within the trim cover assembly 10. It will be appreciated that the trim cover assembly 10 might include additional components or less components than described above. It will also be appreciated that the bolster panels 28, the side panels 30, the back panel 32, and the like might be generically described as a "trim cover".

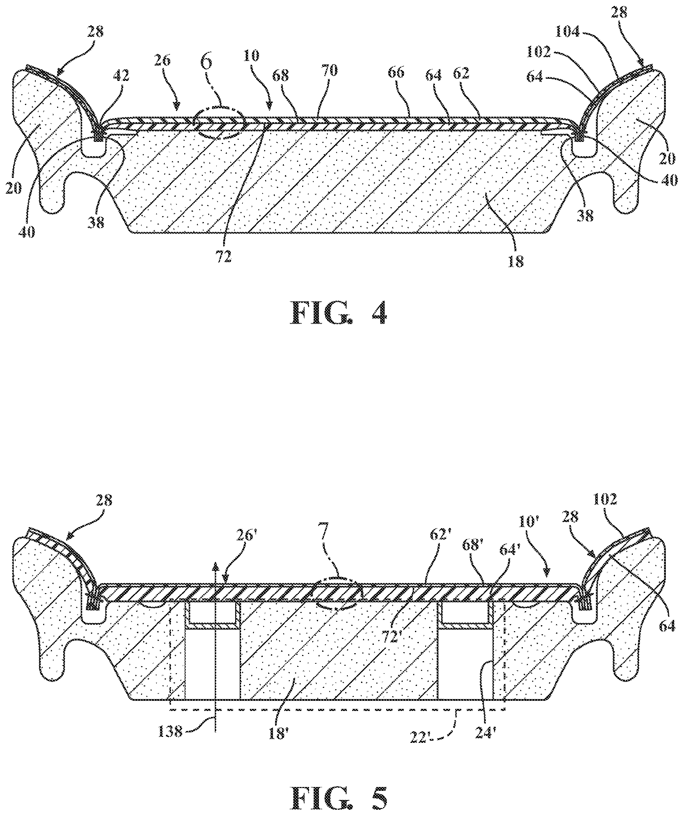

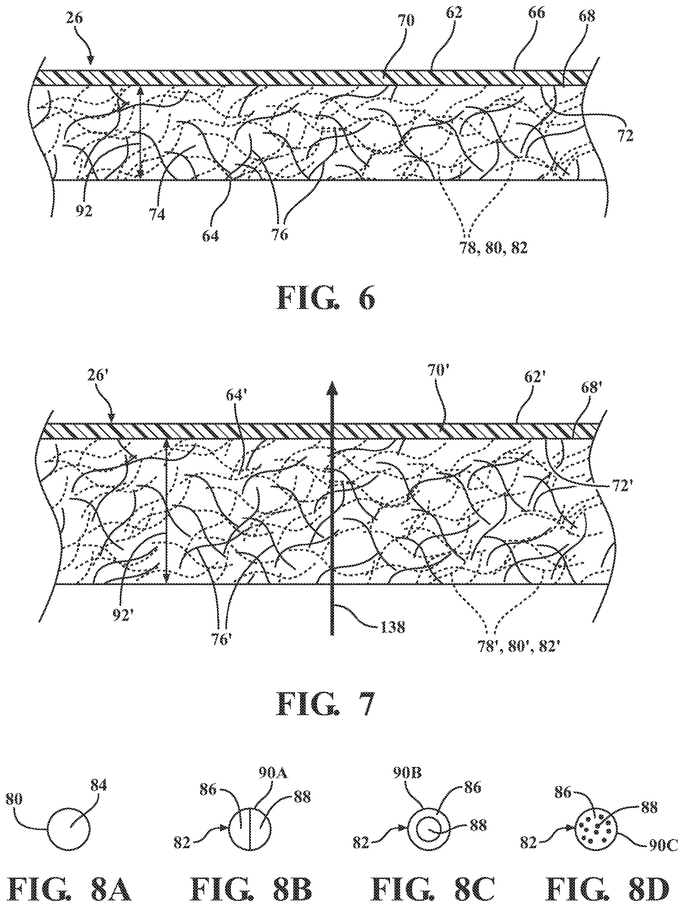

Referring to Figures 4 and 6, the trim cover 26 includes a seat cover 62 and a polyester batting 64. The seat cover 62 has an upper surface 66 opposing a lower surface 68 and is formed out of a cover material 70, such as cloth, vinyl, and/or leather. One exemplary cover material 70 is a polyester fabric. An upper surface 72 of the polyester batting 64 is fixedly coupled to the lower surface 68 of the seat cover 62 to improve the appearance and comfort associated with the trim cover 26. The polyester batting 64 is alternatively described as polyethylene terephthalate batting (hereinafter, "PET batting"). Further, the PET batting 64 is adhesively laminated, powder-laminated, tack sewn, or the like as non-limiting examples, to the lower surface 68 of the seat cover 62. In addition, the PET batting 64 might be assembled with the seat cover 62 and compression molded to form the trim cover 26, as further described below.

Depicted in Figure 6, the PET batting 64 is formed out of a random web 74 of bulk polyester fibers 76 and optional melt polyester fibers 78. The bulk polyester fibers 76 generally include one or more of virgin polyester fibers (PET), recycled polyester fibers (rPET), bio-based polyester fibers, natural polyester fibers, and the like as non-limiting examples.

Referring to Figures 8A-8D, the melt polyester fibers 78 might include monofilament polyester fibers 80 and/or bi-component polyester fibers 82. The monofilament polyester fibers 80 generally have a melting temperature less than the melting temperature of the bulk polyester fibers 76. The monofilament polyester fibers 80 have a cross-section comprising a single type of polyester fiber 84, as shown in Figure 8A. The melting temperature of the monofilament polyester fibers 80 and the ratio of the bulk polyester fibers 76 relative to the monofilament polyester fibers 80 are selected based in part on the desired flexibility and structural stability of the PET batting 64.

Further, the bi-component polyester fibers 82 comprise high-temp polyester fibers 86 and low-temp polyester fibers 88 which are simultaneously extruded to combine the physical and aesthetic properties of two different polyester fibers 86, 88. The low-temp polyester fibers 88 are selected to have a melting temperature less than the melting temperature of the high-temp polyester fibers 86. The low-temp polyester fibers 88 preferably have a melting temperature greater than or equal to about 100 °C and less than or equal to about 180 °C. In another embodiment, the low-temp polyester fibers 88 have a melting temperature equal to or greater than about 100 °C and less than or equal to about 130 °C. In a preferred embodiment, the low-temp polyester fibers 88 have a melting temperature of about 120 °C and the high-temp polyester fibers 86 have melting temperature of about 180 °C or greater. The high-temp polyester fibers 86 provide additional structure and durability to the bi-component polyester fibers 82.

The bi-component polyester fibers 82 are formed by simultaneously extruding the high-temp polyester fibers 86 and the low-temp polyester fibers 88 using generally known methods to form a variety of cross-sections 90A-90C. Referring to Figures 8B-8D, the bi-component polyester fibers 82 might have a side by side extruded cross-section 90A, a core and sheath extruded cross-section 90B, an extruded mixed fiber cross-section 90C, and the like as non-limiting examples. It will be appreciated that the cross-section 90A-90C of the bi-component polyester fibers 82, as well as the melting temperature of the high-temp polyester fibers 86 and the low-temp polyester fibers 86, respectively, might vary without altering the scope of the present invention. In addition, it will be appreciated that the melting temperature might alternately be described as a molding temperature without altering the scope of the present invention.

Referring to Figure 6, the PET batting 64 in one exemplary embodiment includes about 95% - 100% bulk polyester fibers 76 and might include up to about 5% of dyes and other additives. In an alternate embodiment, the PET batting 64 might contain up to about 40% of melt polyester fibers 78, 80, 82 with the remaining of the PET batting 64 formed out of bulk polyester fibers 76. It will be appreciated that the PET batting 64 might contain up to about 5% of dyes and other additives without varying the scope of the present invention. Further, the PET batting 64 has a batting thickness 92 generally between about 3 mm to about 13 mm. It will be appreciated that the batting thickness 92 of the PET batting 64 might vary without altering the scope of the present invention.

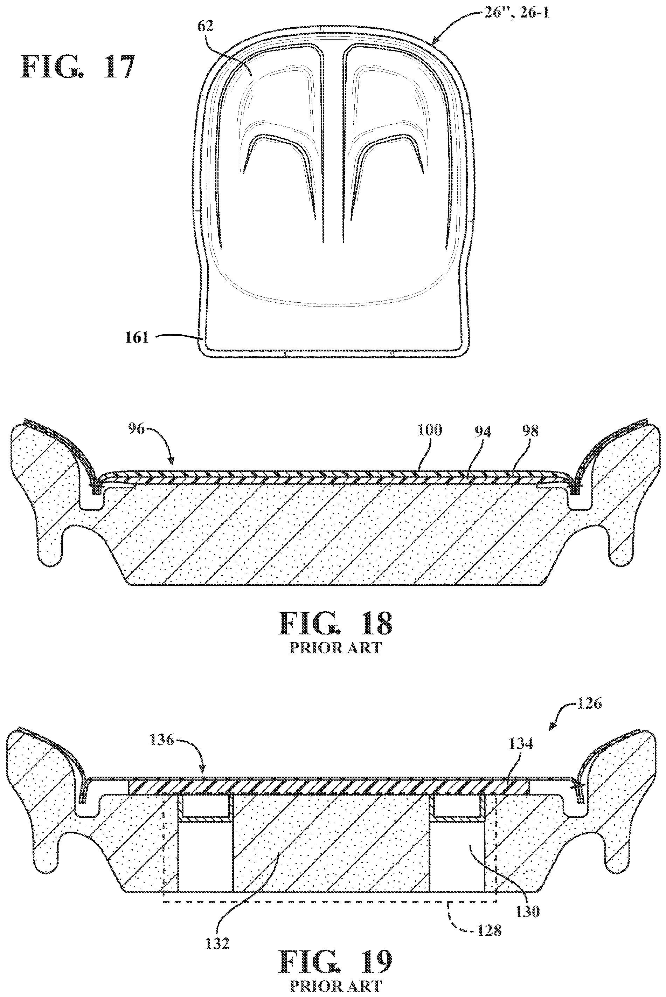

The PET batting 64 has a fiber denier (D) generally less than about 45 D. The fiber denier of the PET batting 64 is selected based in part on the specific application of the trim cover 26. For example, the PET batting 64 might have a fiber denier of greater or equal to about 1 D and less than or equal to about 10 D when used in applications where air permeability is not required. In applications where the PET batting 64 is replacing a conventional polyurethane foam plus pad 94 (shown in Figure 18), a fiber denier greater or equal to about 20 D and less than or equal to about 25 D might be selected. The PET batting 64 might be selected to have a fiber denier greater or equal to about 35 D and less than or equal to about 45 D in certain applications requiring a minimum air permeability of about 100 to about 120 cfm (cubic feet per minute). It will be appreciated that the fiber denier of the PET batting 64 may vary without altering the scope of the present invention.

The web 74 of the bulk polyester fibers 76 and the optional melt polyester fibers 78, 80, 82 forming the PET batting 64 might be stabilized using various known methods, commonly described as a multi-knit batting, a non-woven batting, a hot-melt batting, and the like, as non-limiting examples. The multi-knit batting is formed by stitch-bonding the web 74 with longitudinal yarns (not shown) to bond and hold the web 74 in place. The non-woven batting is formed by needles punched through the web 74 to push the web 74 into a consistent stable batt. The hot-melt batting is formed from a web 74 which includes bulk polyester fibers 76 and melt polyester fibers 78. To form the hot-melt batting, the web 74 is passed through a warmer (not shown) which causes at least part of the melt fibers 78 to melt and bond with the remaining fibers 76, 78, 80, 82 in the web 74. It will be appreciated that the PET batting 64 might be stabilized through commonly known processes to produce a multi-knit batting, a non-woven batting, a hot-melt batting, and the like without altering the scope of the present invention.

It will be appreciated that the properties of the PET batting 64 are customizable for various seating applications by varying the fiber denier, the ratio and properties the of bulk polyester fibers 76 and the melt polyester fibers 78, 80, 82, the batting thickness 92, the inclusion of monofilament polyester fibers 80 and/or bi-component polyester fibers 82, the selection of specific high-temp polyester fibers 86 and the low-temp polyester fibers 88 within the bi-component polyester fibers 82, the cross-section 90A-90C of the bi-component polyester fibers 82, the inclusion of a batt stabilization method, and the like to obtain a desired balance of flexibility, structure, and air permeability. In addition, the melting temperatures of the polyester fibers 76, 80, 82, 86, 88 are selected based in part on the selected processing steps to prepare the trim cover 26, as further described below. In addition, low percentages of melt fibers 78 (i.e., between 0% and about 10%) might be incorporated in the PET batting 64 for "soft" applications, such as a replacement for a conventional polyurethane foam pad 94 (Figure 18). High percentages of melt fibers 78 (i.e., greater than about 20% and less than about 40%) might be incorporated into the PET batting 64 for "firm" applications, such as for certain seat back panels 32. Further, it will be appreciated that the polyester fibers 76, 80, 82, 86, 88 preferably comprise recycled polyester fibers (rPET) which are polyester fibers spun from flakes prepared by flaking post-consumer PET plastic bottles. Preferably, the PET batting 64 comprises at least about 60% or more recycled polyester fiber content and is recyclable at end of life using commonly known melt recycling processes.

Referring to Figure 18, a conventional trim cover 96 includes a conventional polyurethane foam pad 94, commonly described as a "plus pad", flame-laminated to a lower surface 98 of a conventional seat cover 100. The conventional trim cover 96 is not recyclable using a melt recycling process because the conventional polyurethane foam pad 94 is of a dissimilar material and is permanently attached to the conventional seat cover 100.

In one embodiment of the present invention shown in Figures 4 and 6, the trim cover 26 includes the PET batting 64 which serves a similar function to the conventional polyurethane foam pad 94 in the conventional trim cover 96 (Figure 18). Replacing the conventional polyurethane foam pad 94 with the PET batting 64 allows the trim cover 26 to be melt recycled since the trim cover 26 lacks polyurethane content. The PET batting 64 provides comparable resilience and mass to the conventional polyurethane foam pad 94 having a thickness of about 3 mm to about 12 mm. Referring to Figure 4, the trim cover assembly 10 includes, in part, the trim cover 26 having lateral edges 38 sewn to respective inboard edges 40 of opposing bolter panels 28 to form sewn seams 42. The trim cover 26 includes a seat cover 62 formed out of the cover material 70 and PET batting 64 attached to the lower surface 68 of the seat cover 62. In addition, the bolster panels 28 include a bolster cover 102 formed out of the cover material 70 and PET batting 64 attached to a lower surface 104 of the bolster cover 102. It will be appreciated that the seat cover 62 and the bolster cover 102 might be formed out of different cover materials 70 and/or different PET batting 64 without altering the scope of the present invention.

The PET batting 64 used as a replacement for conventional polyurethane foam pad 94 has a batting thickness 92 of about 3 mm to about 13 mm. Further, the PET batting 64 has a fiber denier of about 20 D to about 25 D. In certain applications, the PET batting 64 preferably has a batting thickness 92 of about 6 mm and a fiber denier of 25 D. In addition, the PET batting 64 is selected to include about 95% to about 100% bulk polyester fiber 76 and up to about 5% of dyes and other additives. In certain embodiments, PET batting 64 includes about 95% to about 100% of bulk recycled polyester fibers 76. Further, melt polyester fibers 78, 80, 82 might be omitted from the PET batting 64.

The PET batting 64 might be selected to include about 60% to about 90% of recycled bulk polyester fibers 76 and about 10% to about 40% bi-component polyester fibers 82 to reduce a tendency of the PET batting 64 to shred or stretch during cutting and sewing operations. In one embodiment, the PET batting 64 includes about 85% bulk polyester fibers 76 and about 15% melt fibers 78. While the PET batting 64 is still in sheet form (before cutting), the PET batting 64 containing bi-component polyester fibers 82 might be preheated or "tempered" to allow at least part of the bi-component polyester fibers 82 to fuse together which improves the structure and stability of the PET batting 64. After the PET batting 64 is preheated or tempered, the PET batting 64 is attached to the cover material 70.

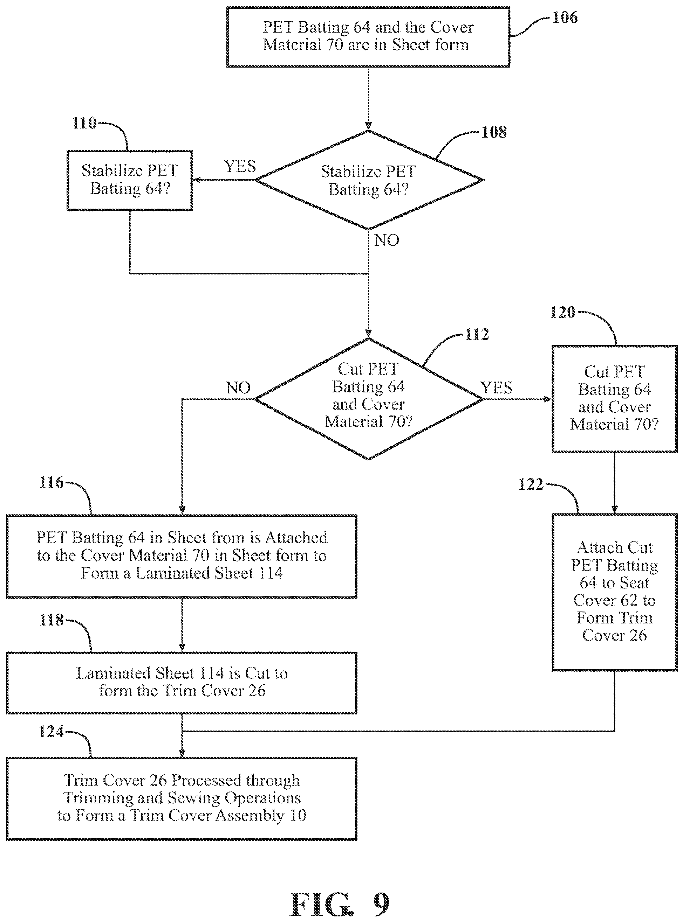

The process to form the trim cover 26 and the finished trim cover assembly 10 is shown in Figure 9. Referring to Figure 9, the PET batting 64 and the cover material 70 are initially in sheet form (step 106). Next, it is determined if the PET batting 64 in sheet form needs to be stabilized (step 108). If the PET batting 64 requires stabilization, the PET batting 64 is passed through a warmer to preheat / temper the PET batting 64 to cause at least part of the bi-component polyester fibers 82 to fuse to the remaining polyester fibers 76, 82 (step 110). After the PET batting 64 is stabilized (step 110) if required or if the PET batting 64 does not require stabilization, it is determined if the PET batting 64 and the cover material 70 will be cut prior to attaching the PET batting 64 to the cover material 70 (step 112). If the PET batting 64 and the cover material 70 will not be cut prior to attaching the PET batting 64 to the cover material 70, then the PET batting 64 is adhesively-laminated, powder-laminated, tack sewn, or the like as non-limiting examples, to the lower surface 68 of the cover material 70 to form a laminated sheet 114 (step 116). Alternatively, the PET batting 64 might be attached to the cover material 70 using a reactive hotmelt, web adhesive, and the like. Next, the laminated sheet 114 is cut to form the trim cover 26 (step 118). If the PET batting 64 and the cover material 70 are to be cut prior to the PET batting 64 being attached to the cover material 70 (step 112), then the PET batting 64 and the cover material 70 are cut into the desired shapes (step 120) followed by the cut PET batting 64 being fixedly coupled to the seat cover 62 to form the trim cover 26 (step 122). Next, the trim cover 26 prepared in step 118 or step 122 is processed through additional trimming and sewing operations to form a finished trim cover assembly 10 (step 124). It will be appreciated that additional components of the trim cover assembly 10, such as bolster panels 28, might be formed using a similar process as used to form the trim covers 26.

When the cover material 70 used in the trim cover 26 is a polyester and the PET batting 64 is used in place of conventional polyurethane foam pad 94, the trim cover 26 can be recycled either mechanically, chemically, or by melting so that the polyester content might be respun into new recycled polyester fibers (rPET). As such, the trim cover 26 might be recycled instead of disposing the trim cover 26 in a landfill.

Referring to Figure 19, a conventional seat assembly 126 is shown which includes a heating and ventilation system 128 having one or more airflow channels 130 passing through a base pad 132. The conventional seat assembly 126 includes a conventional spacer-fabric 134 and a conventional trim cover 136. The conventional spacer-fabric 134 is placed between the base pad 132 and the conventional trim cover 136 to maintain airflow and permeability for the heating and ventilation system 128. However, the conventional spacer-fabric 134 adds significant material cost and requires additional labor to install.

A second embodiment of the trim cover assembly 10' is shown in Figures 5 and 7, where like primed reference numerals represent similar elements as those described above. The trim cover 26' of the second embodiment shown in Figures 5 and 7 includes a PET batting 64' configured to replace the conventional spacer-fabric 134 typically included in a conventional seat assembly 126 having a heating and ventilation system 128. Only significant differences between the two embodiments are reflected in the Figures and the description below.

Referring to Figure 5, the seat assembly 12' includes a heating and ventilation system 22' integrated within the base pad 18' for occupant comfort and temperature control. The heating and ventilation system 22' typically includes one or more airflow channels 24' passing through the base pad 18'. A key performance metric for textiles used in trim covers 26' for seat assemblies 12' having a heating and ventilation system 22' is air permeability, which is evaluated per ASTM D737. Preferably, the minimum level of permeability required through the trim cover 26' (arrow 138) while the seat assembly 12' is unoccupied is about 100-120 cfm (cubic feet per minute) to ensure adequate performance of the heating and ventilation system 22'.

Referring to Figure 7, in order to ensure adequate airflow (arrow 138) through the trim cover 26', the PET batting 64' is selected to have a fabric denier greater or equal to about 35 D and less than or equal to about 45 D. In one embodiment, the PET batting 64' preferably has a fabric denier of about 40 D. In addition, the PET batting 64' comprises about 95% to about 100% of recycled bulk polyester fibers 76' and up to about 5% of dyes and other additives. Further, the PET batting 64' might lack melt polyester fibers 78', 80', 82'. However, it will be appreciated that the PET batting 64' might include melt polyester fibers 78', 80', 82' and that the PET batting 64' might be preheated or tempered while in sheet form to improve handling during cutting and sewing operations. Also, the PET batting 64' is selected to have a batting thickness 92' of greater or equal to about 8 mm and less than or equal to about 15 mm. In one embodiment, the PET batting 64' preferably has an initial batting thickness 92' of about 10 mm. Preferably, the PET batting 64' comprises at least about 60% or more recycled polyester fiber content and is recyclable at end of life using commonly known melt recycling processes.

Referring to Figures 5 and 7, the upper surface 72' of the PET batting 64' is fixedly coupled to the lower surface 68' of the seat cover 62' either while the cover material 70' and the PET batting 64' are in sheet form or after the PET batting 64' and cover material 70' are cut, as previously described in reference to Figure 9. Cost savings and labor savings are obtained related to the trim cover 26' by substituting the PET batting 64' for the conventional spacer-fabric 134. In addition, the trim cover 26' might be sewn to bolster panels 28 comprising the PET batting 64 and the bolster cover 102 as described above in the first embodiment.

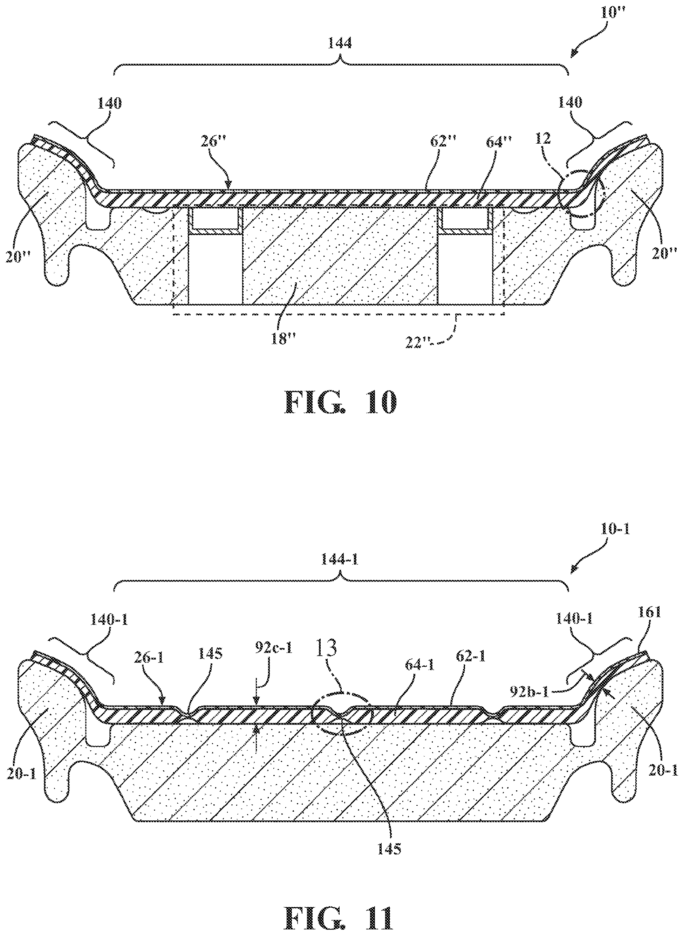

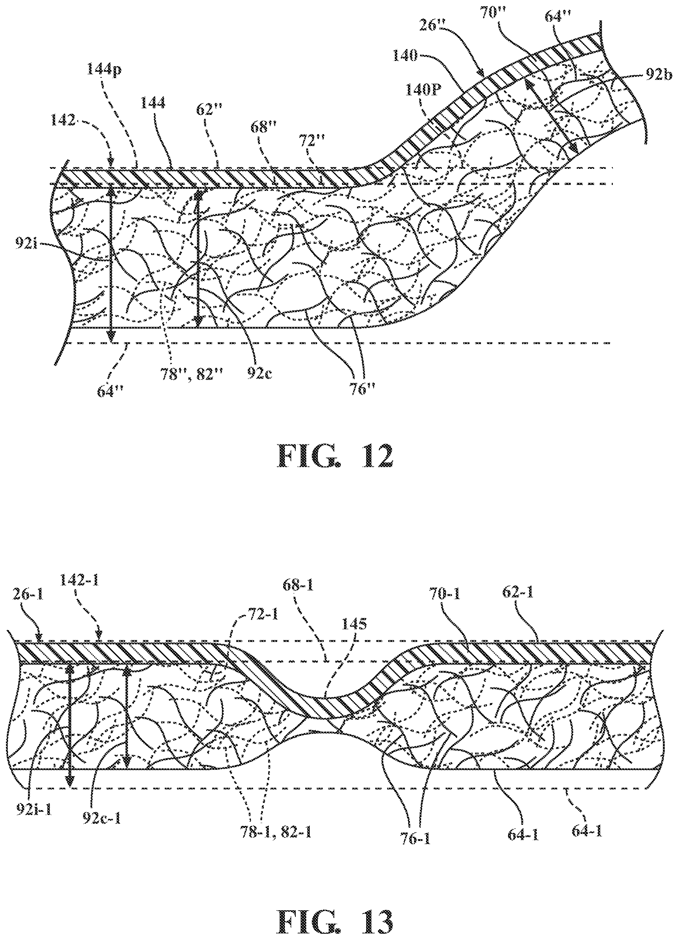

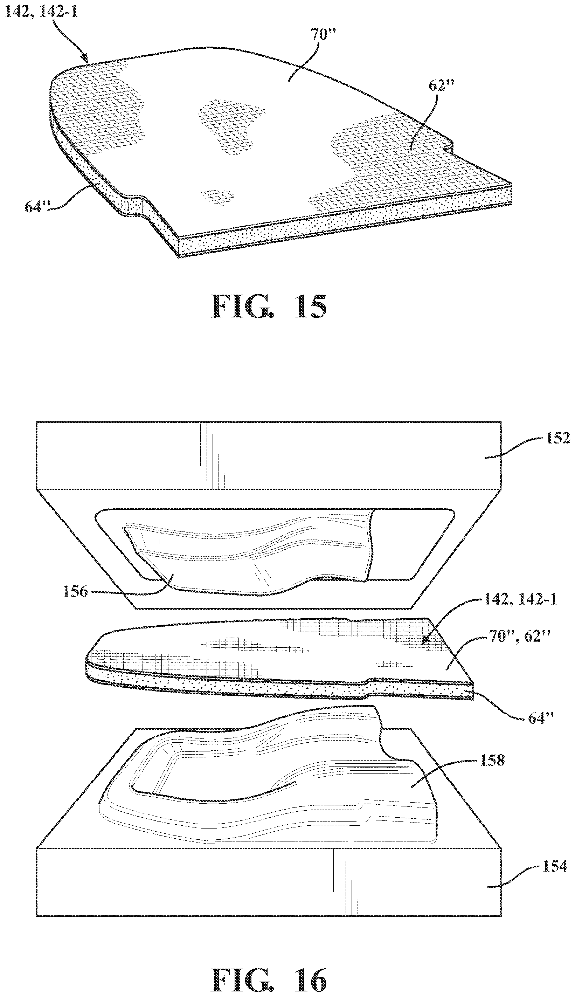

A third embodiment of the trim cover 26" is shown in Figures 10 and 12, where like double primed reference numerals represent similar elements as those described above. The trim cover 26" of the third embodiment shown in Figure 10 includes PET batting 64" configured to replace the conventional spacer-fabric 134 typically included in conventional trim covers 136 for conventional seat assemblies 126 having a heating and ventilation system 128 (see Figure 19). The trim cover 26" might also include integrated bolster sections 140 configured to cover the bolsters 20" instead of sewing the trim cover 26', 26 to the bolster panels 28, as described in the prior embodiments. In addition, the trim cover 26" comprises a 3-dimensional molded panel 26" having a 3-dimensional shape formed by compression molding a laminated blocker 142 (Figure 15). The laminated blocker 142 includes a central section 144P spaced between opposing bolster sections 140P. Only significant differences between the previous embodiments are reflected in the Figures and the description below.

Referring to Figures 10 and 12, the trim cover 26" comprises a seat cover 62" and PET batting 64". The upper surface 72" of the PET batting 64" is adhered to the lower surface 68" of the seat cover 62". The trim cover 26" includes a central section 144 and the opposing bolster sections 140. Depicted in Figure 12, the bolster sections 140 have a batting thickness 92b less than the batting thickness 92c of the central section 144. The PET batting 64" in the central section 144 is configured to allow sufficient airflow and permeability through the trim cover 26" for the heating and ventilation system 22". The PET batting 64" is compressed to a reduced batting thickness 92b in the bolster sections 140 during the compression molding process described below.

The trim cover 26" is a 3-dimensional molded panel 26" formed using a compression molding process. Incorporating the PET batting 64" in place of the conventional spacer-fabric 134 allows the trim cover 26" to be compression molded to form contours and molded grooves 145 (Figure 11) in the trim cover 26". Conventional spacer-fabric 134 is typically unsuitable for use in a compression molding process having a tool temperature in the range of about 65 °C to about 160 °C.

The PET batting 64" is selected to have a sufficient amount of air permeability while allowing the PET batting 64" to be compression molded. In more detail, the PET batting 64" is selected to have a fiber denier greater than or equal to about 35 D and less than or equal to about 45 D. Referring to Figure 12, the PET batting 64" is selected to have an initial batting thickness 92i greater or equal to about 8 mm and less than or equal to about 15 mm. Further, the PET batting 64" is selected to have an initial batting thickness 92i generally about 2 mm thicker than the desired compression molded batting thickness 92c in the central section 144 of the trim cover 26". In an exemplary embodiment, a PET batting 64" having an initial batting thickness 92i of about 10 mm and a fiber denier of about 40 D provides sufficient air permeability to meet occupied airflow requirements when incorporated into the finished trim cover assembly 10".

In addition, the PET batting 64" is selected to include at least about 60% and less than or equal to about 90% bulk polyester fibers 76" with the bulk polyester fibers 76" preferably comprising recycled bulk polyester fibers 76". The PET batting 64" also includes at least about 10% and less than or equal to about 40% of melt polyester fibers 78" comprising preferably bi-component polyester fibers 82". The bi-component polyester fibers 82" are selected to allow the PET batting 64" to be compression moldable in a temperature range of at least about 100 °C and less than or equal to about 130 °C. In one embodiment, the PET batting 64" includes about 85% bulk polyester fibers 76" and about 15% melt fibers 78". Preferably, the PET batting 64" comprises at least about 60% or more recycled polyester fiber content and is recyclable at end of life using commonly known melt recycling processes. Further, the PET batting 64" is selected to be suitable for compression molding using a compression molding process such as disclosed in WO/2019/232538, which is incorporated herein by reference in its entirety.

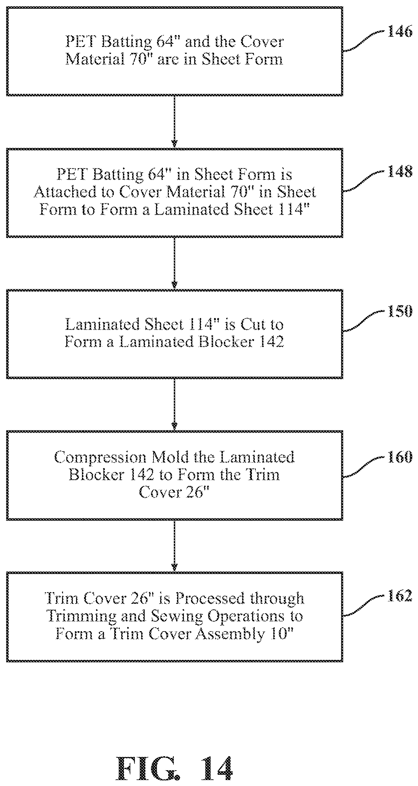

The process to form the trim cover 26" and the finished trim cover assembly 10" is shown in Figure 14. Referring to Figure 14, the PET batting 64" and the cover material 70" are initially in sheet form (step 146). Next, the PET batting 64" in sheet form is adhesively laminated, powder-laminated, tack sewn, or the like as non-limiting examples, to the lower surface 68" of the cover material 70" to form a laminated sheet 114" (step 148). Next, the laminated sheet 114" is cut to form the laminated blocker 142 (step 150). The laminated blocker 142 is shown in Figure 15. Next, the laminated blocker 142 is placed between upper and lower molds 152, 154 having 3-dimensional contoured molding surfaces 156, 158 and compression molded to form the trim cover 26" (step 160), as illustrated in Figure 16. The laminated blocker 142 is compression molded under moderate tool pressures and a tool temperature greater or equal to about 65 °C and less than or equal to about 160 °C so that the bi-component polyester fibers 82" at least partially melt at a temperature of greater or equal to about 100 °C and less than or equal to about 130 °C to form a 3-dimensional molded panel as trim cover 26", as illustrated in Figures 12 and 17. It will be appreciated that the tool temperature and the melting temperature might vary without altering the scope of the present invention.

As illustrated in Figure 12, the laminated blocker 142 might compress the initial batting thickness 92i of the PET batting 64" to different batting thicknesses 92b, 92c in certain portions of the trim cover 26" (such as the bolster sections 140 in comparison to the central section 144). In addition, the outer perimeter 161 of the laminated blocker 142 might be compressed to a reduced batting thickness for improved sewing ease.

Next, the trim cover 26" is processed through additional trimming and sewing operations to form a finished trim cover assembly 10" (step 162). It will be appreciated that additional components of the trim cover assembly 10" might be formed using a similar process as used to form the trim covers 26". It will be appreciated that the molded trim cover 26" might be sewn to additional components, including additional molded panels, without altering the scope of the present invention. In addition, the trim cover 26" might be formed to cover both the base pad 18" and associated bolsters 20", as illustrated in Figure 10.

A fourth embodiment of the trim cover 26-1 is shown in Figures 11 and 13, where reference numerals designated with "-1" represent similar elements as those described above. The trim cover 26-1 of the fourth embodiment shown in Figure 11 includes PET batting 64-1 configured to replace the conventional polyurethane foam pad 94 typically included in certain conventional trim covers 96 (see Figure 18). The trim cover 26-1 might also include integrated bolster sections 140-1 configured to cover the bolsters 20-1 instead of sewing the trim cover 26', 26 to the bolster panels 28, as described in the prior embodiments. In addition, the trim cover 26-1 is a 3-dimensional molded panel 26-1 formed by compression molding a laminated blocker 142-1 (Figure 15). Only significant differences between the previous embodiments are reflected in the Figures and the description below.

Referring to Figures 11 and 13, the trim cover 26-1 comprises a seat cover 62-1 and PET batting 64-1. The upper surface 72-1 of the PET batting 64-1 is adhered to the lower surface 68-1 of the seat cover 62-1 which is formed out of the cover material 70-1. The trim cover 26-1 includes a central section 144-1 and the opposing bolster sections 140-1. Depicted in Figure 11, the bolster sections 140-1 have a nominal batting thickness 92b-1 similar to the nominal batting thickness 92c-1 of the central section 144-1. The PET batting 64-1 might be compressed in localized areas to form one or more molded grooves 145 during the compression molding process described below. The molded grooves 145 might have a general appearance of sewn seams.

The trim cover 26-1 is a 3-dimensional molded panel 26-1 formed using the compression molding process discussed above in reference to the third embodiment. The PET batting 64-1 allows the trim cover 26-1 to be compression molded to form contours and molded grooves 145 in the trim cover 26-1.

In more detail, the PET batting 64-1 is selected to have a fiber denier greater than or equal to about 20 D and less than or equal to about 25 D. Referring to Figure 13, the PET batting 64-1 is selected to have an initial batting thickness 92i-1 greater or equal to about 3 mm and less than or equal to about 10 mm. Further, the PET batting 64-1 is selected to have an initial batting thickness 92i-1 generally about 2 mm thicker than the desired compression molded batting thickness 92c-1 of the trim cover 26-1. In an exemplary embodiment, the PET batting 64-1 has an initial batting thickness 92i-c of about 6 mm and a fiber denier of about 25 D.

In addition, the PET batting 64-1 is selected to include at least about 60% and less than or equal to about 90% bulk polyester fibers 76-1 with the bulk polyester fibers 76-1 preferably comprising recycled bulk polyester fibers 76-1. The PET batting 64-1 also includes at least about 10% and less than or equal to about 40% of melt polyester fibers 78-1 comprising preferably bi-component polyester fibers 82-1. The bi-component polyester fibers 82-1 are selected to allow the PET batting 64-1 to be compression moldable in a temperature range of at least about 100 °C and less than or equal to about 130 °C. In one embodiment, the PET batting 64-1 includes about 85% bulk polyester fibers 76-1 and about 15% melt fibers 78-1.

The process to form the trim cover 26-1 is similar to the process previously described in Figure 14 with the PET batting 64-1 used in place of the prior PET batting 64". In summary, the PET batting 64-1 is adhered to the cover material 70-1 to form a laminated sheet 114. Next, the laminated sheet 114 is cut to form the laminated blocker 142-1 (Figure 15) in step 150. The laminated blocker 142-1 is placed between upper and lower molds 152, 154 having 3-dimensional contoured molding surfaces 156, 158 and compression molded to form the trim cover 26-1 (step 160), as illustrated in Figure 16. The laminated blocker 142-1 is compression molded under moderate tool pressures and a tool temperature greater or equal to about 65 °C and less than or equal to about 160 °C so that the bi-component polyester fibers 82-1 at least partially melt at a temperature of greater or equal to about 100 °C and less than or equal to about 130 °C to form a 3-dimensional molded panel as trim cover 26-1 shown in Figure 17. It will be appreciated that the tool temperature and the melting temperature might vary without altering the scope of the present invention. Next, the trim cover 26-1 is processed through additional trimming and sewing operations to form a finished trim cover assembly 10-1 (step 162).

As discussed above, the trim cover assembly 10, 10', 10", 10-1 of the present invention includes trim cover 26, 26', 26", 26-1 comprising PET batting 64, 64', 64", 64-1 adhered to a lower surface 68, 68', 68", 68-1 of a seat cover 62, 62', 62", 62-1 formed out of a cover material 70, 70', 70", 70-1. The PET batting 64, 64', 64", 64-1 comprises a web 74 of bulk polyester fibers 76, 76', 76", 76-1 and optional melt polyester fibers 78, 78', 78", 78-1. The trim cover 26", 26-1 is optionally compression molded. The cover material 70, 70', 70", 70-1 might be formed out of polyester fabric. Inclusion of polyester fabric and the PET batting 64, 64', 64", 64-1 allows the trim cover 26, 26', 26", 26-1 to be recyclable. Further, the properties of the PET batting 64, 64', 64", 64-1 is customizable so that the PET batting 64, 64', 64", 64-1 might replace conventional polyurethane foam pads 94 or conventional spacer-fabrics 134 used in conventional trim covers 96.

The invention has been described in an illustrative manner, and it is to be understood that the terminology, which has been used, is intended to be in the nature of words of description rather than of limitation. Many modifications and variations of the present invention are possible in light of the above teachings. It is, therefore, to be understood that within the scope of the appended claims, the invention may be practiced other than as specifically described.

## Claims

1. A trim cover (26, 26', 26", 26-1) for an automotive seat assembly (10, 10', 10", 10-1), comprising:
a seat cover (62, 62', 62", 62-1) having a lower surface (68, 68', 68", 68-1); and
a polyester batting (64, 64', 64", 64-1) fixedly coupled to the lower surface (68, 68', 68", 68-1) of the seat cover (62, 62', 62", 62-1), the polyester batting (64, 64', 64", 64-1) comprising polyester fibers.

2. The trim cover (26, 26', 26", 26-1) as set forth in claim 1, wherein:
the polyester fibers comprise at least about 95% of bulk polyester fibers (76, 76', 76", 76-1); and
the polyester batting (64, 64', 64", 64-1) has a fiber denier of about 20 D to about 25 D and a batting thickness of about 3 mm to about 13 mm.

3. The trim cover (26, 26', 26", 26-1) as set forth in claim 1, wherein:
the polyester fibers comprise at least about 95% of bulk polyester fibers (76, 76', 76", 76-1); and
the polyester batting (64, 64', 64", 64-1) has a fiber denier of about 35 D to about 45 D and a batting thickness of about 8 mm to about 15 mm.

4. The trim cover (26, 26', 26", 26-1) as set forth in claim 3, wherein the seat cover (62, 62', 62", 62-1) comprises a polyester fabric.

5. The trim cover (26, 26', 26", 26-1) as set forth in claim 1, wherein the polyester fibers comprise at least about 60% and equal or less than about 90% bulk polyester fibers (76, 76', 76", 76-1) and at least about 10% and equal or less than about 40% melt polyester fibers (78, 78', 78", 78-1).

6. The trim cover (26, 26', 26", 26-1) as set forth in claim 5, wherein the melt polyester fibers (78, 78', 78", 78-1) comprise bi-component polyester fibers (82, 82", 82-1).

7. The trim cover (26, 26', 26", 26-1) as set forth in claim 6, wherein:
the bi-component polyester fibers (82, 82", 82-1) comprise high-temp polyester fibers (86) and low-temp polyester fibers (88), the low-temp polyester fibers (88) having a melting temperature greater than or equal to about 100 °C and less than or equal to about 180 °C, the high-temp polyester fibers (86) having a melting temperature greater than the melting temperature of the low-temp polyester fibers (88).

8. The trim cover (26, 26', 26", 26-1) as set forth in claim 7, wherein the polyester batting (64, 64', 64", 64-1) has a fiber denier of about 20 D to about 25 D and has a batting thickness greater or equal to about 3 mm and less than or equal to about 13 mm; and/or
wherein the polyester batting (64, 64', 64", 64-1) has a fiber denier of about 35 D to about 45 D and a batting thickness of about 8 mm to about 15 mm; and/or
wherein the trim cover (26, 26', 26", 26-1) is compression molded to form a 3-dimensional shape after the polyester batting (64, 64', 64", 64-1) is fixedly coupled to the seat cover (62, 62', 62", 62-1); and/or
wherein the bi-component polyester fibers (82, 82", 82-1) have a side-by-side cross-section, core and sheath cross-section, or a mixed fiber cross-section; and/or
wherein the bulk polyester fibers (76, 76', 76", 76-1) comprise one or more of virgin polyester fibers, recycled polyester fibers, bio-based polyester fibers, and natural polyester fibers; and/or
wherein the seat cover (62, 62', 62", 62-1) comprises a polyester fabric, preferably wherein the polyester batting (64, 64', 64", 64-1) comprising at least 60% recycled polyester fiber, more preferably wherein the trim cover (26, 26', 26", 26-1) is melt recyclable.

9. A method of forming a trim cover (26, 26', 26", 26-1) for seat assembly, comprising the steps of:
providing a cover material (70, 70°, 70", 70-1) having a lower surface (68, 68', 68", 68-1);
providing polyester batting (64, 64', 64", 64-1) comprising polyester fibers;
adhering the polyester batting (64, 64', 64", 64-1) to the lower surface (68, 68', 68", 68-1) of the cover material (70, 70°, 70", 70-1) to form a laminated sheet (114, 114"); and
cutting the laminated sheet (114, 114") to form the trim cover (26, 26', 26", 26-1).

10. The method as set forth in claim 9, wherein the polyester batting (64, 64', 64", 64-1) comprises bulk polyester fibers (76, 76', 76", 76-1).

11. The method as set forth in claim 10, wherein the polyester batting (64, 64', 64", 64-1) comprises between about 10% and about 40% melt polyester fibers (78, 78', 78", 78-1).

12. The method as set forth in claim 11, wherein:
the melt polyester fibers (78, 78', 78", 78-1) include bi-component polyester fibers (82, 82", 82-1) which include high-temp polyester fibers (86) and low-temp polyester fibers (88);
the low-temp polyester fibers (88) have a melting temperature greater than or equal to about 100 °C and less than or equal to about 180 °C; and
the high-temp polyester fibers (86) having a melting temperature greater than the melting temperature of the low-temp polyester fibers (88).

13. The method as set forth in claim 12, wherein the polyester batting (64, 64', 64", 64-1) has a fiber denier at least about 20 D and less than or equal to about 45 D.

14. The method as set forth in claim 13, further comprising a step of preheating the PET batting prior to adhering the polyester batting (64, 64', 64", 64-1) to the cover material (70, 70°, 70", 70-1).

15. The method as set forth in claim 13, further comprising a step of compression molding the trim cover (26, 26', 26", 26-1) to form a 3-dimensional molded panel wherein at least a portion of the low-temp polyester fibers (88) melt at a molding temperature of between about 100 °C to about 180 °C during the compression molding, preferably wherein the bi-component polyester fibers (82, 82", 82-1) have a melting temperature equal or greater than about 100 °C and less than or equal to about 130 °C.
